# EUROPÄISCHE PATENTSCHRIFT

(11) **EP 2 217 854 B1**
(45) Veröffentlichungstag und Bekanntmachung des Hinweises auf die Patenterteilung: **20.03.2013**
(21) Anmeldenummer: 08847886.2
(22) Anmeldetag: 06.11.2008
(51) Int. Cl.: B60Q 1/068, B60Q 1/04

(54) **SCHEINWERFER FÜR EIN KRAFTFAHRZEUG MIT TEMPERATURKOMPENSIERTER AUFNAHME EINES LICHTMODULS**
HEADLIGHT FOR A MOTOR VEHICLE WITH TEMPERATURE-COMPENSATED HOLDER FOR A LAMP MODULE
PHARE POUR UN VÉHICULE AUTOMOBILE COMPORTANT UN LOGEMENT DE MODULE DE LUMIÈRE À COMPENSATION DE TEMPÉRATURE

(30) Priorität: 07.11.2007 DE 102007052985
(43) Veröffentlichungstag der Anmeldung: 18.08.2010
(73) Patentinhaber: Hella KGaA Hueck & Co., 59552 Lippstadt (DE)
(72) Erfinder: SEIGER, Ralf, 59558 Lippstadt (DE)
(86) Internationale Anmeldenummer: PCT/EP2008/065064
(87) Internationale Veröffentlichungsnummer: WO 2009/060032

(56) Entgegenhaltungen:
- EP-A- 1 437 545
- DE-A1- 3 518 404
- FR-A- 2 687 762

## Beschreibung

Die vorliegende Erfindung betrifft einen Scheinwerfer für ein Kraftfahrzeug mit einem Grundkörper, in dem wenigstens ein Lichtmodul zur Emittierung eines Abblendlichtes aufgenommen ist, wobei die Emittierung des Abblendlichtes in einem vorgegebenen Winkel oder innerhalb eines Winkelbereichs erfolgt.

Das durch einen Scheinwerfer emittierte Abblendlicht weist eine Hell-Dunkel-Grenze auf, welche relativ zur Horizontalen eine Höhe einhalten muss, um beispielsweise den Gegenverkehr nicht zu blenden. Daher muss die Hell-Dunkel-Grenze meist innerhalb eines vorgegebenen Winkelbereichs liegen. Um den Winkel bzw. den Winkelbereich einzuhalten, muss das Lichtmodul im Scheinwerfer und zur Horizontalen des Kraftfahrzeugs eine bestimmte Neigung einhalten, wobei die Hell-Dunkel-Grenze unzulässig erhöht wird, wenn das Lichtmodul entgegen der Fahrtrichtung nach hinten verkippt, wobei ein Verkippen nach vorne einen zu niedrigen Lichtkegel erzeugt, da die Hell-Dunkel-Grenze nach unten wandert.

Die Neigung des Lichtmoduls kann sich durch Wärmeeinflüsse auf den Scheinwerfer und insbesondere auf die Aufnahme des Lichtmoduls im Scheinwerfer verändern. Beeinflusst ist die genaue Neigung des Lichtmoduls sowohl durch die Außentemperatur als auch beispielsweise durch die Motorwärme oder durch die Wärme, die das Leuchtmittel innerhalb des Lichtmoduls an den Innenraum des Scheinwerfers abgibt. So kann im Betrieb des Scheinwerfers oder bei Inbetriebnahme des Kraftfahrzeugs bei niedrigen Temperaturen eine andere Neigung des Lichtmoduls auftreten als nach einem längeren Betrieb des Kraftfahrzeugs bei höheren Temperaturen. Folglich kann sich die Hell-Dunkel-Grenze unzulässig erhöhen, sodass der Gegenverkehr geblendet wird.

Die Offenlegungsschrift DE 35 18 404 A1 offenbart einen Scheinwerfer für ein Kraftfahrzeug, welcher einen Abblendschirm aufweist, der so montiert ist, dass er mittels eines Hilfsstücks in einem Träger aufgehängt ist, wobei der Träger, der Abblendschirm und das Hilfsstück relative Abmessungen und lineare Wärmeausdehnungskoeffizienten solcherart haben, dass ungeachtet der Änderungen der Betriebszeit der obere Begrenzungsrand des Abblendschirms eine unveränderliche Lage in Bezug auf die Horizontale beibehält.

Der Nachteil einer derartigen Ausführung ist die sehr aufwendige Aufnahme des Lichtmoduls, welches in nicht einteiliger Form sowohl vorderseitig als auch rückseitig aufgeteilt in einen Reflektor und eine Projektionslinse an einem Fuß befestigt werden muss. Dieser wirkt mit einer Halterung zusammen, an der die Linse angeordnet ist, wohingegen der Reflektor am Fuß angeordnet werden muss. Insbesondere ist ein Hilfsaufhängungsstück erforderlich, um den Schirm, welcher die Hell-Dunkel-Grenze generiert, innerhalb des Lichtmoduls aufzuhängen. Im Ergebnis kann lediglich eine unveränderliche Stellung des Schirms in Bezug auf die Horizontale erreicht werden, wobei beispielsweise eine Verkippung der gesamten aus Reflektor und Linse bestehenden Einheit im Scheinwerfer selbst nicht ausgeglichen werden kann. Die thermische Kompensation betrifft daher lediglich die Komponenten des Lichtmoduls selbst, sodass auftretende Verkippungen des Lichtmoduls im Scheinwerfer bzw. im Kraftfahrzeug nicht kompensiert werden können.

Die Offenlegungsschrift EP 1 437 545 A2 offenbart einen Scheinwerfer bei dem zwischen der Rückseite des Reflektors und dem Gehäuse eine Halte- und Führungseinrichtung vorgesehen ist, die die axiale Längenausdehnung des Reflektors zulässt.

Es ist daher die Aufgabe der vorliegenden Erfindung, einen Scheinwerfer für ein Kraftfahrzeug bereitzustellen, der eine temperaturunempfindliche Aufnahme des Lichtmoduls im Scheinwerfer zur Einhaltung eines vorgegebenen Winkels oder eines Winkelbereichs der Emittierung des Abblendlichtes ermöglicht.

Dieser Aufgabe wird ausgehend von einem Scheinwerfer für ein Kraftfahrzeug gemäß des Oberbegriffs des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Aufnahme des Lichtmoduls im Scheinwerfer wenigstens einen Dehnungskörper aufweist, wobei temperaturbedingte Abweichungen der Emittierung des Abblendlichtes vom vorgegebenen Winkel oder aus dem vorgegebenen Winkelbereich durch eine temperaturbedingte Dehnung des Dehnungskörpers ausgleichbar sind.

Durch die erfindungsgemäße Lösung der Aufnahme des Lichtmoduls im Scheinwerfer durch einen Dehnungskörper kann eine gezielte Auswahl eines einfachen Bauelementes getroffen werden, das einen Ausgleich der Abweichung eines emittierten Abblendlichtes von einem vorgegebenen Winkel oder einem Winkelbereich relativ zur Horizontalen oder zur Vertikalen in Bezug auf das Kraftfahrzeug selbsttätig ermöglicht. Die Auswahl eines geeigneten Dehnungskörpers sowohl betreffend das Material als auch die Geometrie kann entweder experimentell oder numerisch bestimmt werden. Der Dehnungskörper bildet einen Teil der Aufnahme des Lichtmoduls im Scheinwerfer, sodass dieser eine mechanische Verbindung bildet und folglich in die Kette verschiedener Verbindungselemente zwischen dem Lichtmodul und dem Kraftfahrzeug eingebunden ist. Ändern sich die Temperaturen im Scheinwerfer, so ändert sich auch die Temperatur des Dehnungskörpers. Die Anordnung des Dehnungskörpers zur Aufnahme des Lichtmoduls ist derart vorgesehen, dass Veränderungen der Neigung des Lichtmoduls im Scheinwerfer in einer ersten Richtung durch die gleichermaßen stattfindende Temperaturerhöhung des Dehnungskörpers wieder kompensiert werden. Mit Anwendung des erfindungsgemäßen Dehnungskörpers ist es unerheblich, bei welcher Temperatur der Scheinwerfer im Kraftfahrzeug betrieben wird, da die Kompensation der Wärmedehnung und der damit erfolgenden Verkippung des Lichtmoduls durch den Dehnungskörper über einen großen Temperaturbereich gleichmäßig erfolgt.

Der Dehnungskörper kann entweder direkt über nur ein oder aber mehrere Dehnungskörper im Scheinwerfer aufgenommen werden, wobei vorzugsweise ein Tragrahmen vorgesehen sein kann, der zur Aufnahme des Lichtmoduls im Scheinwerfer ausgebildet ist. Der Tragrahmen wird über Befestigungselemente fest oder definiert verstellbar im Grundkörper des Scheinwerfers angeordnet, wobei der Tragrahmen eine O-förmige Grundstruktur aufweist, und mittig in der O-förmigen Öffnung das Lichtmodul aufnimmt. Sowohl der Grundkörper des Scheinwerfer als auch der Tragrahmen können aus einem glasfaserverstärkten Kunststoffmaterial hergestellt sein, bei dem die Wärmedehnungen minimal sind. Dennoch können aufgrund der Größe der Strukturen und der Empfindlichkeit des Lichtmoduls gegenüber Verkippungen so große Wärmedrifts entstehen, dass eine Kompensation der Anordnung des Lichtmoduls im Scheinwerfer erforderlich ist.

Gemäß einer Weiterbildung der Erfindung ist wenigstens ein Dehnungskörper zwischen dem Tragrahmen und dem Lichtmodul angeordnet. Vorzugsweise erstrecken sich zwischen dem Tragrahmen und dem Lichtmodul drei Aufnahmeelemente, um eine Aufnahmeebene zur Aufnahme des Lichtmoduls zu bilden. Dabei kann vorgesehen sein, dass im unteren Bereich zwischen dem Tragrahmen und dem Lichtmodul zwei Aufnahmeelemente mit einer hohen Steifigkeit angeordnet sind. Diese beiden Aufnahmeelemente bilden eine Art Gelenkverbindung, da die Änderung der Neigung des Lichtmoduls im Bereich < 1mm erfolgt und die gelenkartige Anordnung durch die beiden unten liegenden Aufnahmeelemente trotz ihrer hohen Steifigkeit möglich ist. Das dritte Aufnahmeelement ist im oberen Bereich zwischen dem Tragrahmen und dem Lichtmodul angeordnet und erfindungsgemäß durch den Dehnungskörper gebildet.

Das Lichtmodul besteht im Wesentlichen aus einem Reflektor und einer Projektionslinse, die in einem Modulkörper aufgenommen sind. Der Modulkörper hat eine in Richtung der Horizontalen verlaufende längliche Erstreckung, und nimmt rückseitig den Reflektor und vorderseitig die Projektionslinse auf. Zwischen dem Reflektor und der Projektionslinse befindet sich die Erstreckungsebene des Tragrahmens, folglich besteht einerseits die Möglichkeit der Anordnung des Dehnungselementes zwischen dem Tragrahmen und dem Bereich des Reflektors des Lichtmoduls als andererseits auch zwischen dem Tragrahmen und dem Bereich der Projektionslinse des Lichtmoduls, wobei die lichtverteilende Einheit auch ein Reflektormodul sein kann. Abhängig von der Anordnung des Dehnungselementes erfolgt entweder eine Erhöhung der Hell-Dunkel-Grenze des Abblendlichtes bei einer Erwärmung, wenn der Dehnungskörper zwischen dem Tragrahmen und dem Bereich des Reflektors angeordnet ist, wohingegen eine Absenkung der Hell-Dunkel-Grenze ermöglicht wird, sofern der Dehnungskörper zwischen dem Tragrahmen und dem Bereich der Projektionslinse des Lichtmoduls angeordnet ist.

Durch die oberseitige Anordnung des Dehnungskörpers ist dieser der Abwärme des Leuchtmittels innerhalb des Reflektors des Lichtmoduls ausgesetzt. Folglich wird der Vorteil erreicht, dass bei einer Erwärmung des Gesamtsystems des Scheinwerfers die Erwärmung des Dehnungskörpers mit geringfügig höheren Temperaturen erfolgt, um den Kompensationseffekt zu verstärken.

Es ist von Vorteil, dass der Dehnungskörper eine zylinderförmige oder kegelstumpfförmige Gestalt mit einer in einer Zylinderachse länglichen Erstreckung aufweist. Alternativ kann der Dehnungskörper auch eine würfelförmige oder eine längliche Gestalt mit rechteckigem oder quadratischem Querschnitt aufweisen, wobei auch eine Sechskantform, wie eine Schraube, Verwendung finden kann. Ferner können zwischen dem Tragrahmen und dem Lichtmodul auf der oberen Seite auch zwei oder mehr Dehnungskörper angeordnet sein, um eine höhere Verbindungsfestigkeit zu schaffen. Gemäß einer Weiterbildung kann das Lichtmodul auch vollständig durch Dehnungskörper im Tragrahmen aufgenommen sein, wobei die Aufnahme im oberen und im unteren Bereich jeweils zu einer gegenüberliegenden Seite zwischen dem Lichtmodul und dem Tragrahmen erfolgt. Sind beispielhaft auf der oberen Seite die Dehnungskörper zwischen dem Tragrahmen und der Seite des Reflektors des Lichtmoduls angeordnet, so werden auf der unteren Seite die Dehnungskörper zwischen dem Tragrahmen und dem Bereich der Projektionslinse angeordnet. Damit addieren sich die Kompensationswege der Dehnungskörper, sodass sich - gleiche Temperaturen vorausgesetzt - die Kompensationswege verdoppeln, und das Lichtmodul in seiner Verkippung um den doppelten Betrag korrigiert wird.

Gemäß einer weiteren Ausführungsform der Erfindung weist der Tragrahmen eine Montagegeometrie mit einem in Richtung der Zylinderachse ausgekragten Aufnahmepunkt zur Aufnahme des Dehnungskörpers auf, um eine vergrößerte freie Länge (L) für den Dehnungskörper zwischen dem Tragrahmen und dem Lichtmodul zu schaffen. Alternativ kann im Lichtmodul ein ausgekragter Aufnahmepunkt zur Aufnahme des Dehnungskörpers vorgesehen sein, wobei zur Verlängerung des Dehnungskörpers in Richtung der Zylinderachse auch an beiden Komponenten ausgekragte Aufnahmepunkte vorgesehen sein können. Durch die erfindungsgemäße Montagegeometrie kann ohne Änderung der Gesamtkonstruktion ein Dehnungskörper zwischen dem Tragrahmen und dem Lichtmodul eingebaut werden, der eine freie Mindestlänge aufweist. Der ausgekragte Bereich des Rahmens kann einteilig mit diesem verbunden sein, was beispielsweise durch ein Kunststoffanspritzen oder ein Spritzgießen als Gesamtbauteil mit der Montagegeometrie möglich ist. Die Montagegeometrie besteht aus einem armförmigen Bereich mit einem tellerartigen Ende, in dem mittig ein Befestigungsloch zur Verschraubung des Dehnungskörpers vorgesehen ist. Die Richtung des ausgekragten Aufnahmepunktes erstreckt sich in Richtung der Projektionslinse des Lichtmoduls, sodass der Dehnungskörper in die Montagegeometrie eingesetzt werden kann und das gegenüberliegende Ende des Dehnungskörpers mit den beiden unten im Tragrahmen angeordneten Aufnahmeelementen die gleiche Aufnahmeebene bildet, wie die konventionelle Konstruktion mit drei herkömmlichen Aufnahmeelementen. Je stärker der Aufnahmepunkt der Montagegeometrie ausgekragt ist, desto länger kann der Dehnungskörper gewählt werden, und desto größer ist die geometrische Temperaturkompensation. Das Material des Tragrahmens und der Montagegeometrie ist ein glasfaserverstärkter Kunststoff, um auftretende Dehnungen des Materials dabei der Änderung der Temperatur möglichst gering zu halten.

Gemäß eines weiteren Vorteils der vorliegenden Erfindung weist der Dehnungskörper ein Kunststoffmaterial auf, wobei an den Endflächen des zylinderförmigen oder kegelstumpfförmigen Körpers die Aufnahme am Tragrahmen und am Lichtmodul erfolgt. Vorzugsweise betrifft das Kunststoffmaterial einen thermoplastischen Kunststoff, welcher ein Polybutylenterephthalat (PBT), ein Polyamid (PA), ein Polycarbonat (PC), ein Polyoximethylen (POM) oder ein Polymethylmethacrylat (PMMA) ist. Die genannten Kunststoffe weisen Wärmeausdehnungskoeffizienten auf, welche sich im Bereich zwischen 50 * 10EX-6 1/K und 200 * 10EX-6 1/K betragen.

Die Länge des Dehnungskörpers kann bei vorhandenen Konstruktionen von Scheinwerfern und Aufnahmen der Lichtmodule durch die Tragrahmen mit Abmessungen von 20 bis 50mm, bevorzugt von 30 bis 40mm und besonders bevorzugt von 35mm gewählt werden. Bei einer Länge von 35mm und einer Temperaturänderung von beispielsweise 30K kann eine Längenänderung des Dehnungskörpers von 0,15mm erzielt werden, wenn beispielsweise als Material des Dehnungskörpers ein Polybutylenterephthalat (PBT) gewählt wird. Eine Verkippung des Lichtmoduls durch eine Dehnung des Dehnungskörpers um 0,15mm kann hinreichend sein, um bei einem Temperaturunterschied von 30K die Höhe der Hell-Dunkel-Grenze im vorgegebenen Winkel bzw. im vorgegebenen Winkelbereich zu gewährleisten. Ferner weisen die genannten Kunststoffmaterialien Festigkeiten auf, die trotz der Wärmedehnungseigenschaften eine hinreichende Steifigkeit der Aufnahme des Lichtmoduls im Tragrahmen ermöglichen.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigt:
- Fig. 1: eine perspektivische Ansicht eines Scheinwerfers, welcher einen Tragrahmen zur Aufnahme eines Lichtmoduls aufweist, bei dem die Anordnung eines erfindungsgemäßen Dehnungskörpers gemäß der vorliegenden Erfindung vorgesehen ist;
- Fig. 2: eine quergeschnittene Seitenansicht der Aufnahme eines Lichtmoduls im Tragrahmen eines Scheinwerfers gemäß der Figur 1 mit einem Dehnungskörper gemäß der vorliegenden Erfindung und
- Fig.3: eine perspektivische Ansicht eines Tragrahmens mit einem erfindungsgemäßen Dehnungskörper zur Aufnahme eines Lichtmoduls.

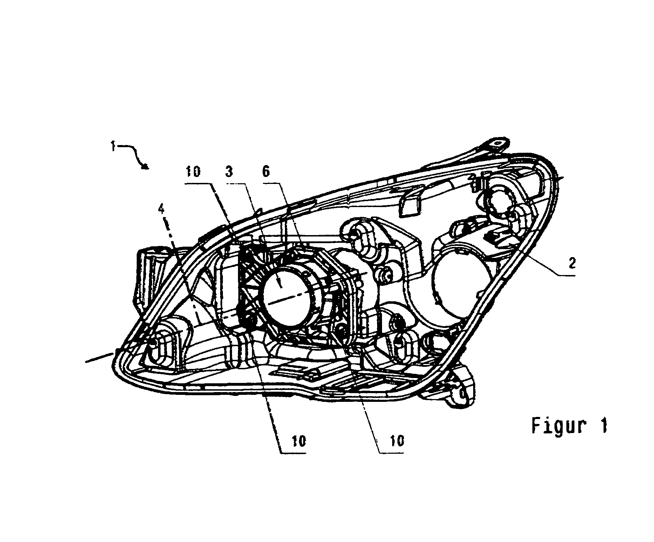

Der in Figur 1 gezeigte Scheinwerfer 1 weist zunächst einen Grundkörper 2 auf, welcher zugleich das Gehäuse des Scheinwerfers 1 bildet. In dem Grundkörper 2 ist ein Lichtmodul 3 über einen Tragrahmen 6 aufgenommen. Hierfür wird der Tragrahmen 6 zunächst durch drei Befestigungselemente 10 am Grundkörper 2 des Scheinwerfers 1 montiert. Die Befestigungselemente 10 sind gemäß des Ausführungsbeispiels Gelenkstücke, die den Tragrahmen verstellbar halten, wobei das obere der drei Befestigungselemente noch durch eine Leuchtweitenregeleinrichtung in der Lage ergänzt werden kann.

Der Tragrahmen 6 weist einen O-förmigen Grundkörper auf, durch den mittig das Lichtmodul 3 hindurch geführt ist. Das Lichtmodul 3 weist eine Horizontale 4 auf, welche zur Ausrichtung des zu emittierenden Abblendlichtes als Referenz dient.

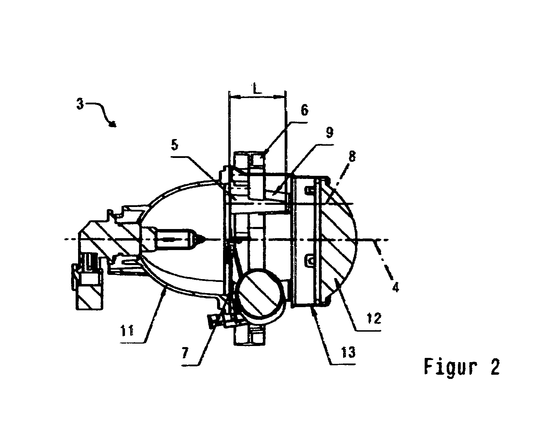

Figur 2 zeigt einen Querschnitt eines Lichtmoduls 3, in dem auf der linken Seite ein Reflektor 11 und auf der rechten Seite eine Projektionslinse 12 dargestellt ist. Der Reflektor 11 und die Projektionslinse 12 sind in einem Modulkörper 13 aufgenommen, welcher eine in Richtung der Horizontalen 4 längliche Erstreckung aufweist. Auf der Reflektorseite umfasst der Modulkörper 13 den zumeist aus einem Stahlblech tiefgezogenen oder aus einem gegossenem Aluminiummaterial bestehenden Reflektor 11, wobei auf der rechten Seite eine Fassung zur Aufnahme der Projektionslinse 12 im Modulkörper 13 ausgebildet ist.

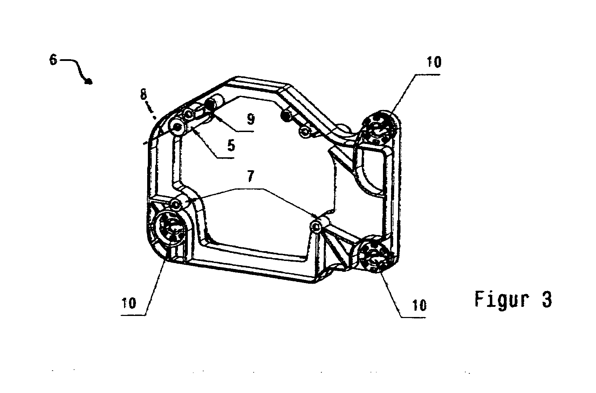

In Figur 3 ist ein Tragrahmen 6 dargestellt, welcher in Figur 2 geschnitten gezeigt ist und sich in seiner Erstreckungsebene etwa senkrecht zur Horizontalen 4 auf der Mitte des Modulkörpers 13 befindet. Der Tragrahmen 6 weist einen O-förmigen Ausschnitt im Innenbereich auf, durch den sich das Lichtmodul 3 hindurch erstreckt. Das Lichtmodul 3 ist über drei Aufnahmeelemente 7 am Tragrahmen 6 befestigt, wobei durch die geschnittene Darstellung lediglich ein Aufnahmeelement 7 im unteren Bereich gezeigt ist. Ein erfindungsgemäßer Dehnungskörper 5 ist auf der oberen Seite zwischen dem Tragrahmen 6 und dem Lichtmodul 3 angeordnet, welcher ebenfalls die Funktion eines Aufnahmeelementes übernimmt. Der Dehnungskörper 5 ist zwischen dem Reflektorbereich des Modulkörpers und einer Montagegeometrie 9, die am Tragrahmen 6 angeformt ist, angeordnet. Der Dehnungskörper 5 weist eine freie Länge (L) auf, und erstreckt sich in Richtung einer Zylinderachse 8. Die Geometrie des Dehnungskörpers 5 betrifft eine kegelstumpfartige Form, welche sich in Richtung der Montagegeometrie 9 verjüngt. Die Erstreckungsrichtung der Zylinderachse 8 ist parallel zur Horizontalen 4 angeordnet.

Erwärmt sich nunmehr die Anordnung aus Lichtmodul 3 und Tragrahmen 6, so wird auch der Dehnungskörper 5 die gleiche oder eine ähnliche Temperaturerhöhung erfahren. Durch die Temperaturerhöhung kann sich das Lichtmodul 3 relativ zur Horizontalen 4 verkippen. Die Verkippung kann entweder durch eine Wärmedehnung des Lichtmodul 3 selbst, des Tragrahmens 6, des Scheinwerfers oder der Aufnahme des Scheinwerfers im Kraftfahrzeug verursacht sein. Unabhängig von der Ursache der Verkippung des Lichtmoduls 3 dient nunmehr der Dehnungskörper 5 zur Kompensation der Verkippung, indem sich dieser bei Temperaturerhöhung ebenfalls ausdehnt. Die steif angebundenen Aufnahmeelemente 7 bilden eine Gelenkachse und verursachen keine temperaturbedingte Lageveränderung des Lichtmoduls 3. Erwärmt sich jedoch der Dehnungskörper 5, so dehnt sich dieser aus und das Lichtmodul 3 wird relativ zur Horizontalen 4 entgegen der Fahrtrichtung in Richtung des Reflektors 11 verkippt. Die Länge, das Material und die Temperaturbeeinflussung des Dehnungskörpers 5 können derart bemessen sein, dass das emittierte Abblendlicht relativ zur Horizontalen 4 einen konstanten und temperaturabhängigen Winkel aufweist, um ein Überschreiten der Hell-Dunkel-Grenze des Abblendlichtes hinsichtlich des zulässigen Winkels oder Winkelbereichs zur Horizontalen 4 zu vermeiden.

### Bezugszeichenliste

- 1: Scheinwerfer
- 2: Grundkörper
- 3: Lichtmodul
- 4: Horizontale
- 5: Dehnungskörper
- 6: Tragrahmen
- 7: Aufnahmeelement
- 8: Zylinderachse
- 9: Montagegeometrie
- 10: Befestigungselement
- 11: Reflektor
- 12: Projektionslinse
- 13: Modulkörper
- L: feie Länge

## Patentansprüche

1. Scheinwerfer (1) für ein Kraftfahrzeug mit einem Grundkörper (2), in dem wenigstens ein Lichtmodul (3) zur Emittierung eines Abblendlichtes im Scheinwerfer (1) aufgenommen ist, wobei die Emittierung des Abblendlichtes in einem vorgegebenen Winkel oder innerhalb eines Winkelbereiches relativ zur Horizontalen (4) oder zur Vertikalen in Bezug auf das Kraftfahrzeug erfolgt,
**dadurch gekennzeichnet,**
**dass** die Aufnahme des Lichtmoduls (3) im Scheinwerfer (1) wenigstens einen Dehnungskörper (5) aufweist, wobei temperaturbedingte Abweichungen der Emittierung des Abblendlichtes vom vorgegebenen Winkel oder aus dem vorgegebenen Winkelbereich durch eine temperaturbedingte Dehnung des Dehnungskörpers (5) ausgleichbar sind, und dass das Lichtmodul (3) über einen Tragrahmen (6) im Scheinwerfer (1) aufgenommen ist und der vorgegebene Winkel oder Winkelbereich relativ zur Horizontalen (4) oder zur Vertikalen in Bezug auf das Kraftfahrzeug ausgebildet ist.

2. Scheinwerfer (1) nach Anspruch 1, **dadurch gekennzeichnet, dass** wenigstens ein Dehnungskörper (5) zwischen dem Tragrahmen (6) und dem Lichtmodul (3) angeordnet ist.

3. Scheinwerfer (1) nach Anspruch 1 oder 2, **dadurch gekennzeichnet, dass** zwischen dem Tragrahmen (6) und dem Lichtmodul (3) drei Aufnahmeelemente (7) angeordnet sind, um eine Aufnahmeebene zur Aufnahme des Lichtmoduls (3) zu bilden.

4. Scheinwerfer (1) nach Anspruch 3, **dadurch gekennzeichnet, dass** im unteren Bereich zwischen Tragrahmen (6) und Lichtmodul (3) zwei Aufnahmeelemente (7) mit hoher Steifigkeit angeordnet sind, wobei das Aufnahmeelement im oberen Beriech aus dem Dehnungskörper (5) gebildet ist.

5. Scheinwerfer (1) nach einem der vorgenannten Ansprüche, **dadurch gekennzeichnet, dass** der Dehnungskörper (5) eine zylinderförmige oder kegelstumpfförmige Gestalt mit einer in einer Zylinderachse (8) länglichen Erstreckung aufweist.

6. Scheinwerfer (1) nach einem der vorgenannten Ansprüche, **dadurch gekennzeichnet, dass** der Tragrahmen (6) eine Montagegeometrie (9) mit einem in Richtung der Zylinderachse (5) ausgekragten Aufnahmepunkt zur Aufnahme des Dehnungskörpers (5) aufweist, um eine vergrößerte freie Länge (L) für den Dehnungskörper (5) zwischen dem Tragrahmen (6) und dem Lichtmodul (3) zu schaffen.

7. Scheinwerfer (1) nach einem der vorgenannten Ansprüche, **dadurch gekennzeichnet, dass** der Dehnungskörper (5) ein Kunststoffmaterial aufweist, wobei an den Endflächen des zylinderförmigen oder kegelstumpfförmigen Körpers die Aufnahme am Tragrahmen (6) und am Lichtmodul (3) erfolgt.

8. Scheinwerfer (1) nach Anspruch 7, **dadurch gekennzeichnet, dass** das Kunststoffmaterial ein thermoplastischer Kunststoff und bevorzugt ein Polybutylenterephthalat (PBT), ein Polyamid (PA), ein Polycarbonat (PC), ein Polyoximethylen (POM) oder ein Polymethylmethacrylat (PMMA) ist.

9. Scheinwerfer (1) nach einem der vorgenannten Ansprüche, **dadurch gekennzeichnet, dass** die Länge des Dehnungskörpers (5) 20mm bis 50mm, bevorzugt 30mm bis 40mm und besonders bevorzugt 35mm beträgt, um bei einer Temperaturänderung von 30K eine Längenänderung von wenigstens 0,15mm zu erzielen, wobei der Wärmeausdehnungskoeffizient wenigstens 145*10EX-6 1/K beträgt.

## Claims

1. Headlamp (1) for a motor vehicle with a base body (2), in which at least one light module (3) for the emission of a low beam is received in the headlamp (1), wherein the emission of the low beam is executed at a given angle or within an angle range relative to the horizontal plane (4) or the vertical plane with regard to the motor vehicle,
**characterized in that**
the reception of the light module (3) in the headlamp (1) has at least one expansion element (5), wherein temperature-related deviations of the emission of the low beam from the specified angle or from the specified angle range are compensable by a temperature-related expansion of the expansion element (5), and [in that the light module (3) is received in the headlamp (1) by means of a carrier frame (6) and the specified angle or angle range is designed relative to the horizontal plane (4) or the vertical plane with regard to the motor vehicle.

2. Headlamp (1) according to Claim 1, **characterized in that** at least one expansion element (5) is arranged between the carrier frame (6) and the light module (3).

3. Headlamp (1) according to Claim 1 or 2, **characterized in that** three reception elements (7) are arranged between the carrier frame (6) and the light module (3) to form a reception plane for the reception of the light module (3).

4. Headlamp (1) according to Claim 3, **characterized in that** two reception elements (7) of great rigidity are arranged in the lower region between the carrier frame (6) and the light module (3), the reception element in the upper region being formed by the expansion element (5).

5. Headlamp (1) according to one of the aforementioned Claims, **characterized in that** the expansion element (5) has a cylinder- or a frustum shape with a longitudinal expansion following a cylinder axis (8).

6. Headlamp (1) according to one of the aforementioned Claims, **characterized in that** the carrier frame (6) has an assembly geometry (9) with a reception point protruding in the direction of the cylinder axis (5) for the reception of the expansion element (5) to create an increased free length (L) for the expansion element (5) between the carrier frame (6) and the light module (3).

7. Headlamp (1) according to one of the aforementioned Claims, **characterized in that** the expansion element (5) has a plastic material, and wherein the reception on the carrier frame (6) and on the light module (3) is executed on the end faces of the cylinder- or frustum-shaped element.

8. Headlamp (1) according to Claim 7, **characterized in that** the plastic material is a thermoplastic material and preferably a polybuthylene terephtalate (PBT), a polyamide (PA), a polycarbonate (PC), a polyoxymethylene (POM) or a polymethyl methacrylate (PMMA).

9. Headlamp (1) according to one of the aforementioned Claims, **characterized in that** the length of the expansion element (5) is 20mm to 50mm, preferably 30mm to 40mm and in a preferred embodiment 35mm, to achieve a change in length of at least 0.15mm at a change of temperature of 30K, the coefficient of thermal expansion being at least 145*10EX-61/K.

## Revendications

1. Projecteur (1) pour un véhicule automobile avec un corps de base (2) dans lequel au moins un module de lumière (3) est intégré au projecteur (1) pour émettre un feu code, l'émission du feu code étant réalisée dans un angle donné ou dans une zone d'angle imposée par rapport à l'horizontale (4) ou à la verticale en relation au véhicule,
**caractérisé en ce que**
le logement du module de lumière (3) dans le projecteur (1) présente au moins un corps de dilatation (5), les dérivations dues à la température de l'émission du feu code de l'angle donné ou de la zone d'angle imposée par une dilatation due à la température du corps de dilatation (5) étant compensables et que le module de lumière (3) est intégré au projecteur (1) au moyen d'une poutre (6) et l'angle donné ou la zone d'angle imposée sont conçus par rapport à l'horizontale (4) ou à la verticale en relation au véhicule.

2. Projecteur (1) selon la revendication 1, **caractérisé en ce qu'au** moins un corps de dilatation (5) est disposé entre la poutre (6) et le module de lumière (3).

3. Projecteur (1) selon la revendication 1 ou 2, **caractérisé en ce que** trois éléments de logement (7) sont disposés entre la poutre (6) et le module de lumière (3) pour former un plan de logement pour le logement du module de lumière (3).

4. Projecteur (1) selon la revendication 3, **caractérisé en ce que** dans la zone inférieure entre la poutre (6) et le module de lumière (3) deux éléments de logement (7) à haute rigidité sont disposés, l'élément de logement dans la zone supérieure étant formé du corps de dilatation (5).

5. Projecteur (1) selon l'une des revendications précédentes, **caractérisé en ce que** le corps de dilatation (5) présente une forme cylindrique ou tronconique avec une étendue oblongue dans un axe de cylindre (8).

6. Projecteur (1) selon l'une des revendications précédentes, **caractérisé en ce que** la poutre (6) présente une géométrie de montage (9) avec un point de logement en porte-à-faux en direction de l'axe du cylindre (5) pour loger le corps de dilatation (5) pour créer une longueur (L) agrandie libre pour le corps de dilatation (5) entre la poutre (6) et le module de lumière (3).

7. Projecteur (1) selon l'une des revendications précédentes, **caractérisé en ce que** le corps de dilatation (5) présente une matière plastique, le logement sur la poutre (6) et au module de lumière (3) étant réalisés aux surfaces d'extrémité du corps cylindrique ou tronconique.

8. Projecteur (1) selon la revendication 7, **caractérisé en ce que** la matière plastique est une résine thermoplastique et de préférence un téréphtalate de polybuthylène (PBT), un polyamide (PA), un polycarbonate (PC), un polyacétal (POM) ou un polyméthacrylate de méthyle (PMMA).

9. Projecteur (1) selon l'une des revendications précédentes, **caractérisé en ce que** la longueur du corps de dilatation (5) s'élève à 20 mm - 50 mm, de préférence à 30 mm - 40 mm et de haute préférence à 35 mm pour obtenir un allongement du moins 0,15 mm en cas d'une variation de température de 30 K, le coefficient de dilatation thermique s'élevant à 145*10EX-6 1/K au moins.
